# EUROPEAN PATENT APPLICATION

(11) **EP 4 757 331 A1**
(43) Date of publication of application: **10.06.2026**
(21) Application number: 24848327.3
(22) Date of filing: 31.07.2024
(51) Int. Cl.: H04N 23/61, H04N 5/262

(54) **VIDEO PROCESSING METHOD AND APPARATUS, AND ELECTRONIC DEVICE**

(30) Priority: 31.07.2023 CN 202310952753
(71) Applicant: Beijing Zitiao Network Technology Co., Ltd., Beijing 100190 (CN)
(72) Inventor: WU, Jinyong, Beijing 100028 (CN); NIU, Xusheng, Beijing 100028 (CN); XU, Wang, Beijing 100028 (CN); LI, Jian, Beijing 100028 (CN)
(74) Representative: Isarpatent
(86) International application number: PCT/CN2024/109000
(87) International publication number: WO 2025/026372

(57) **Abstract**

The disclosure provides a video processing method, an apparatus, and an electronic device. The method includes: obtaining a first video frame image in a first video; determining a target object in the first video frame image; performing, based on a display position of the target object in the first video frame image, editing processing on a video frame in the first video to obtain a second video, wherein display positions of the target object in video frame images of the second video are the same as the display position of the target object in the first video frame image.

## Description

This application claims the priority of Chinese Patent Application No. 2023109527531, filed Jul. 31, 2023, entitled "VIDEO PROCESSING METHOD, APPARATUS AND ELECTRONIC DEVICE", the entirety of which is incorporated herein by reference.

### FIELD

Embodiments of the present disclosure relate to the field of video processing technologies, and in particular, to a video processing method, an apparatus, and an electronic device.

### BACKGROUND

Shooting with camera movement may be a shooting method by moving the shooting lens, so that the shooting object in the video is located at a fixed position of the screen. For example, by moving the lens, the photographed object may always be located at the center of the screen.

At present, the electronic device may implement shooting with camera movement by using the auxiliary shooting device. For example, the auxiliary shooting device may be an intelligent selfie stick. After the user determines the shooting object in the video, if the shooting object moves, the electronic device may also control the intelligent selfie stick to move, so that the position of the shooting object in the screen of the electronic device is unchanged. However, the foregoing method needs to be implemented by using the auxiliary shooting device, and the auxiliary shooting device is not easy to carry and high in cost, thereby causing a relatively high cost of a video for shooting with camera movement.

### SUMMARY

According to a first aspect, the present disclosure provides a video processing method, and the method comprises: obtaining a first video frame image in a first video; determining a target object in the first video frame image; performing, based on a display position of the target object in the first video frame image, editing processing on a video frame in the first video to obtain a second video, wherein display positions of the target object in video frame images of the second video are the same as the display position of the target object in the first video frame image.

According to a second aspect, the present disclosure provides a video processing apparatus, comprising an obtaining module, a determining module, and a processing module, where: the obtaining module is configured to is configured to obtain a first video frame image in a first video; the determining module is configured to determine a target object in the first video frame image; and the processing module is configured to perform, based on a display position of the target object in the first video frame image, editing processing on a video frame in the first video to obtain a second video, wherein display positions of the target object in video frame images of the second video are the same as the display position of the target object in the first video frame image.

According to a third aspect, an embodiment of the present disclosure provides an electronic device, comprising: a processor and a memory; the memory storing computer executable instructions; the processor executing the computer-executable instructions stored in the memory, so that the at least one processor performs the video processing method involved in the above first aspect and various possibilities of the first aspect.

According to a fourth aspect, an embodiment of the present disclosure provides a computer-readable storage medium; the computer-readable storage medium storing computer-executable instructions, when a processor executes the computer-executable instructions, implementing the video processing method involved in the above first aspect and various possibilities of the first aspect.

According to a fifth aspect, an embodiment of the present disclosure provides a computer program product, comprising a computer program, when a processor executes the computer program, implementing the video processing method involved in the above first aspect and various possibilities of the first aspect.

### BRIEF DESCRIPTION OF DRAWINGS

In order to more clearly illustrate the embodiments of the present disclosure or the technical solutions in the prior art, the accompanying drawings need to be used in the description of the embodiments or the prior art will be briefly introduced below. It will be apparent that the drawings in the following description are some embodiments of the present disclosure. For those skilled in the art may also obtain other drawings according to these drawings without creative labor.
FIG. 1 is a schematic diagram of an application scenario provided by an embodiment of the present disclosure;
FIG. 2 is a schematic flowchart of a video processing method provided by an embodiment of the present disclosure;
FIG. 3 is a schematic process diagram of determining a selection box provided by an embodiment of the present disclosure;
FIG. 4 is a schematic process diagram of determining a target object provided by an embodiment of the present disclosure;
FIG. 5 is a schematic diagram of determining a target subject provided by an embodiment of the present disclosure;
FIG. 6 is a schematic diagram of adding a key frame provided by an embodiment of the present disclosure;
FIG. 7 is a schematic diagram of a method for determining a third video frame image provided by an embodiment of the present disclosure;
FIG. 8 is a schematic diagram of a target subject provided by an embodiment of the present disclosure;
FIG. 9 is a schematic diagram of forward frame backtracking provided by an embodiment of the present disclosure;
FIG. 10 is a schematic process diagram of a video processing method provided by an embodiment of the present disclosure;
FIG. 11 is a schematic structural diagram of a video processing apparatus provided by an embodiment of the present disclosure;
FIG. 12 is a schematic structural diagram of an electronic device provided by an embodiment of the present disclosure.

### DETAILED DESCRIPTION

The invention provides a video processing method, an apparatus, and an electronic device, for solving the technical problem that in the prior art, the cost of a video for shooting with camera movement is high.

The invention provides a video processing method, an apparatus, and an electronic device. The electronic device may obtain a first video frame image in a first video, and determine a target object in the first video frame image. The electronic device may perform, based on a display position of the target object in the first video frame image, editing processing on a video frame in the first video to obtain a second video. Where a display position of the target object in a video frame image of the second video is the same as the display position of the target object in the first video frame image. According to the foregoing method, because the electronic device may process, based on a video post-processing manner, the video frames in the first video, and obtain the second video with the camera movement effect. Therefore, the user can obtain the video with the camera movement effect without much camera movement experience, and the difficulty of obtaining the camera movement video is reduced. Furthermore, in the process of obtaining the camera movement video, there is no need to install a device that assists in shooting the camera movement video, thereby reducing the cost of obtaining the camera movement video.

Example embodiments will be described in detail herein, examples of which are illustrated in the accompanying drawings. The following description relates to the accompanying drawings, in which like numerals indicate like or similar elements unless otherwise indicated. The embodiments described in the following example embodiments do not represent all embodiments consistent with the present disclosure. Rather, they are merely examples of devices and methods consistent with some aspects of the disclosure as detailed in the appended claims.

For ease of understanding, concepts related to the embodiments of the present disclosure are described below.

An electronic device is a device that has a wireless transceiver function. The electronic device may be deployed on land, comprising indoor or outdoor, handheld, wearable, or vehicle-mounted; or may be deployed on the water surface (for example, a ship, etc.). The electronic device may be a mobile phone, a tablet, Pad, a computer with a wireless transceiver function, a virtual reality (VR) electronic device, an augmented reality (AR) electronic device, a wireless terminal in industrial control, a vehicle-mounted electronic device, a wireless terminal in a self-driving, a wireless electronic device in a remote medical device, a wireless electronic device in a smart grid, a wireless electronic device in transportation safety, a wireless electronic device in a smart city, a wireless electronic device in a smart home, a wearable electronic device, and the like. The electronic device involved in the embodiments of the present disclosure may also be referred to as a terminal, user equipment (UE), an access electronic device, an in-vehicle terminal, an industrial control terminal, a UE unit, a UE station, a mobile station, a mobile station, a remote station, a remote electronic device, a mobile device, a UE electronic device, a wireless communication device, a UE agent, or a UE apparatus. The electronic device may also be stationary or mobile.

In the related art, the electronic device may implement shooting with camera movement by auxiliary shooting devices. For example, the electronic device is mounted on the smart selfie stick, and the electronic device is connected to the smart selfie stick. The electronic device may control the intelligent selfie stick to move. After the electronic device determines the shooting object, if the shooting object moves to the left, the electronic device controls the intelligent selfie stick to turn left; if the shooting object moves to the right, the electronic device controls the intelligent selfie stick to turn right. In this way, when the moving mirror video is played, the position of the shooting object in the screen of the electronic device is unchanged. However, the above shooting needs to be implemented by the auxiliary shooting device. However, the auxiliary shooting device is not easy to carry and high in cost, thereby a high the cost of videos for shooting with camera movement.

In order to solve the problems in the related technologies, embodiments of the present disclosure provide a video processing method. The electronic device may obtain a first video frame image in a first video, and determine a target object in the first video frame image. The electronic device may perform, based on the display position of the target object in the first video frame image, cropping processing and position movement processing on the second video frame image in the first video frame image to obtain a third video frame image in the second video, so that a display position of the target object in the third video frame image being the same as the display position of the target object in the first video frame image. And the second video is obtained based on the first video frame image and a plurality of third video frame images. In this way, because a display position of the target object in the video frame image of the second video is the same as the display position of the target object in the first video frame image, the electronic device may obtain, based on the video post-processing manner, the second video with the camera movement effect. That is, the user can obtain the video with the camera movement effect without much camera movement experience, and the difficulty of obtaining the camera movement video is reduced. Furthermore, in the process of obtaining the camera movement video, there is no need to install a device that assists in shooting the camera movement video, thereby reducing the cost of obtaining the camera movement video.

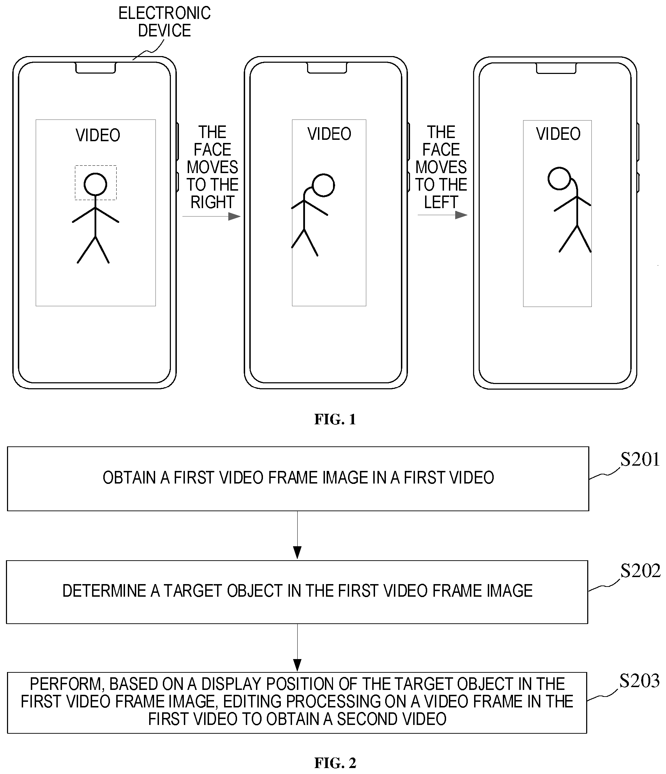

An application scenario of an embodiment of the present disclosure is described below with reference to FIG. 1.

FIG. 1 is a schematic diagram of an application scenario provided by an embodiment of the present disclosure. Referring to FIG. 1, an electronic device is included. Where the electronic device may play a video. The video comprises a user, and the target object may be a face of the user. The electronic device may perform, based on a display position of the face of the user in the video frame image of the first frame, cropping processing and position movement processing on the video frame image of the second frame and the video frame image of the third frame in the video, so that the relative position of the face of the user in the video is unchanged. In this way, when the electronic device obtains the video for shooting without camera movement, the video with camera movement effect may be obtained by performing post-processing on the video. The video with the camera movement effect can be obtained without installing a shooting device that assists in operation, and the cost of obtaining the video for shooting with camera movement is reduced.

It should be noted that FIG. 1 is merely an example application scenario of the embodiments of the present disclosure, and is not a limitation on the application scenario of the embodiments of the present disclosure.

The technical solutions of the present disclosure and how the technical solutions of the present disclosure to solve the technical problem above are described in detail below with reference to specific embodiments. The following several specific embodiments may be combined with each other, and the same or similar concepts or processes may not be repeated in some embodiments. Embodiments of the present disclosure will be described below with reference to the accompanying drawings.

FIG. 2 is a schematic flowchart of a video processing method provided by an embodiment of the present disclosure. Referring to FIG. 2, the method may include the followings:
S201, a first video frame image in a first video is obtained.

The executing body of the embodiment of the present disclosure may be an electronic device or a video processing apparatus deployed in the electronic device. The video processing apparatus may be implemented by software, and the video processing apparatus may also be implemented by combining software and hardware, which is not limited in the embodiments of the present disclosure.

Optionally, the first video may be a video shot by the electronic device. For example, the electronic device may shoot a video in real time to obtain a first video. Optionally, the first video may be a video prestored by the electronic device. For example, the electronic device may pre-store the video A and the video B. If the electronic device performs editing processing on the video A, the electronic device determines the video A as the first video. If the electronic device performs editing processing on the video B, the electronic device determines the video B as the first video.

Optionally, it should be noted that the first video may be a video obtained based on a manner of shooting with camera movement, or the first video may be a video obtained based on a manner of shooting without camera movement, which is not limited in the embodiments of the present disclosure.

Optionally, the first video frame image may be an image frame in the first video. For example, the first video frame image may be a video frame image of any frame in the first video, the first image may also be a video frame image of the current frame of the first video, which is not limited in the embodiments of the present disclosure.

Optionally, the electronic device may determine the first video frame image based on the operation of the user. For example, if the user performs touch on a video frame image of the initial frame in the first video, the electronic device may determine the video frame image of the initial frame as the first video frame image. if the user performs touch on a video frame image of the 10th frame in the first video, the electronic device may determine the video frame image of the first frame as the 10th video frame image.

It should be noted that the electronic device may also obtain, based on any feasible implementation manner, the first video frame image in the first video, which is not limited in the embodiments of the present disclosure.

S202, a target object in the first video frame image is determined.

The target object may be an object whose display position is to be fixed. For example, if the electronic device fixes the display position of the face in the first video frame image, the electronic device may determine that the target object is a face in the first video frame image. If the electronic device fixes the display position of the left hand in the first video frame image, the electronic device may determine that the target object is the left hand in the first video frame image. If the electronic device fixes the display position of the right leg in the first video frame image, the electronic device may determine that the target object is the right leg in the first video frame image.

The electronic device may determine, based on the following feasible implementation manner, a target object in the first video frame image: detecting to-be-selected objects in the first video frame image, and determining a respective position of the respective to-be-selected object in the first video frame image. Generating, in the first video frame image, based on the respective position of the respective to-be-selected object in the first video frame image, a respective selection box corresponding to the respective to-be-selected object. Determining, in response to a touch operation on the selection box, a to-be-selected object corresponding to the selection box as the target object.

Optionally, the electronic device detects to-be-selected objects in the first video frame image may specifically be: obtaining at least one to-be-selected subject in the first video frame image. Determining, in response to a touch operation on the at least one to-be-selected subject, a target subject from at least one to-be-selected subject, and determining an object comprised in the target subject as a to-be-selected object.

The to-be-selected subject may be a user comprised in the first video frame image. For example, if the first video frame image comprises user A and user B, the first video frame image may comprise 2 to-be-selected subjects. One to-be-selected subject is user A, and the other to-be-selected subject is user B. Optionally, the to-be-selected subject may comprise at least one to-be-selected object. For example, the to-be-selected subject may be a user, and the to-be-selected objects comprised in the to-be-selected subject may be a face of the user and a limb of the user, which is not limited in the embodiments of the present disclosure.

Optionally, the target subject may be a to-be-selected subject that is touched by a user. For example, the first video frame image may comprise a to-be-selected object A and a to-be-selected subject B. If the user touches the to-be-selected subject A, the electronic device may determine that the target subject is the to-be-selected subject A. If the user touches the to-be-selected subject B, the electronic device may determine that the target subject is the to-be-selected subject B.

Optionally, the electronic device may detect an object comprised in the target subject, and determine an object comprised in the target subject as the to-be-selected object. For example, the electronic device may obtain the position of the target subject in the first video frame image, and determine, through the face detection algorithm and the body detection algorithm, the to be selected object comprised in the target subject. For example, the electronic device may input the position of the target subject in the first video frame image and the first video frame image to the Bach algorithm. If the Bach algorithm may extract the face key point and the limb key point in the first video frame image, the electronic device may determine that the to-be-selected object comprises a face and a limb.

Optionally, when the electronic device determines the to-be-selected object in the first video frame image, the respective position of the respective to-be-selected object in the first video frame image may be obtained. For example, if the electronic device extracts, based on the Bach algorithm, the face key point and the limb key point in the first video frame image, the electronic device may obtain, based on the Bach algorithm, coordinates of the face key point and the body key point in the first video frame image. Further, the position of the face and the limb in the first video frame image is obtained.

It should be noted that, in embodiments of the present disclosure, the electronic device may recognize 106 key points in the face through a face detection algorithm. After the electronic device detects a large number of key points (e.g., 70 key points, 80 key points, etc., this is not limited in embodiments of the present disclosure), the position of the face in the first video frame image may be determined. The electronic device may recognize 18 key points in the limb through a limb detection algorithm. For the limb recognition, each key point corresponds to one limb (for example, the key point 1 corresponds to a left hand, the key point 2 corresponds to a right hand, and the like, which is not limited in embodiments of the present disclosure). The electronic device may determine, based on the recognized limb key points, a respective position of each limb in the first video frame image.

Optionally, the electronic device may generate, based on the respective position of the respective to-be-selected object in the first video frame image, a respective selection box corresponding to the respective to-be-selected object in the first video frame image. For example, after determining the respective position of the respective to-be-selected object in the first video frame image, the electronic device may generate, based on the position, a respective selection box corresponding to the respective to-be-selected object. The images within the selection box range may comprise to-be-selected objects. The size of the selection box may be arbitrarily set, and the shape of the selection box may be circular or square, which is not limited in the embodiments of the present disclosure.

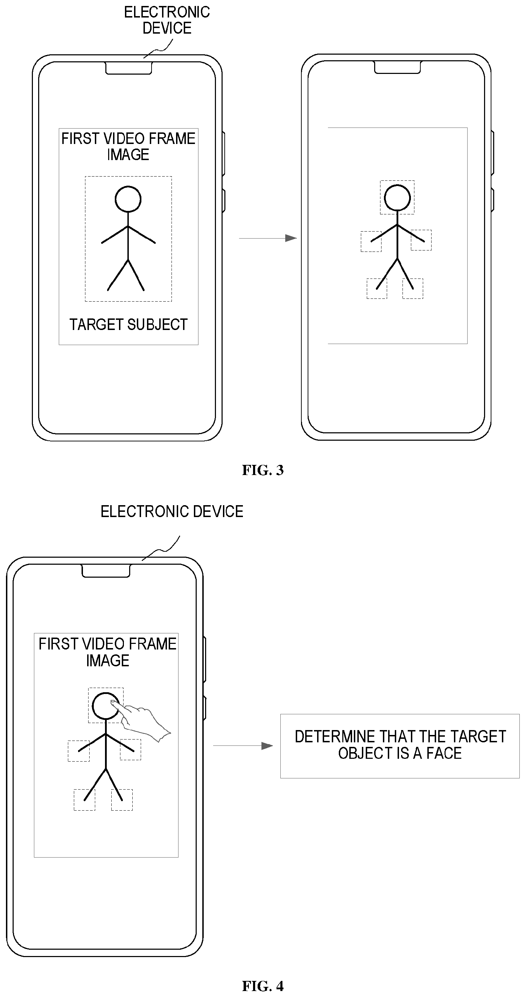

The process of determining the selection box is described below with reference to FIG. 3.

FIG. 3 is a schematic process diagram of determining a selection box provided by an embodiment of the present disclosure. Referring to FIG. 3, an electronic device is included. The electronic device may display the first video frame image. The first video frame image comprises a target subject. The electronic device may obtain a position of the target subject in the first video frame image, and determine, based on the face detection algorithm, the limb detection algorithm, and the position of the target subject in the first video frame image, that the to-be-selected object in the target subject is a face, a left hand, a right hand, a left foot, and a right foot.

Referring to FIG. 3, the electronic device may determine positions of the human face, the left hand, the right hand, the left foot, and the right foot in the first video frame image. In addition, based on the positions of the human face, the left hand, the right hand, the left foot and the right foot in the first video frame image, a selection box comprising a face image, a selection box comprising a left hand image, a selection box comprising a right hand image, a selection box comprising a left foot image, and a selection box comprising a right foot image are generated in the first video frame image.

Optionally, in response to a touch operation on the selection box, the to-be-selected object corresponding to the selection box is determined as the target object. For example, if the target subject in the first video frame image may comprise a selection block 1 and a selection block 2. If the user clicks the selection box 1, the electronic device may determine the to-be-selected object comprised in the selection box 1 as the target object. And if the user clicks the selection box 2, the electronic device may determine the to-be-selected object comprised in the selection box 2 as the target object.

The process of determining the target object is described below with reference to FIG. 4.

FIG. 4 is a schematic process diagram of determining a target object provided by an embodiment of the present disclosure. Referring to FIG. 4, an electronic device is included. The electronic device may display the first video frame image. The to-be-selected object comprised in the first video frame image may be a face, a left hand, a right hand, a left foot, and a right foot of the user. The first video frame image further comprises a selection box corresponding to the face, a selection box corresponding to the left hand, a selection box corresponding to the right hand, a selection box corresponding to the left foot, and a selection box corresponding to the right foot. If the user clicks the selection box corresponding to the face, the electronic device determines that the target object may be a face in the first video frame image.

It should be noted that, if the area of the selection box is less than the preset threshold, the electronic device may delete the selection box, and cancel the display of the selection box in the first video frame image. In this way, the display effect of the selection box can be improved.

Optionally, if the first video frame image comprises a plurality of to-be-selected subjects, the electronic device may determine the target subject based on the target object selected by the user. For example, in an actual application process, the first video frame image of the first video may comprise a plurality of to-be-selected subjects. The target subject may be a to-be-selected subject in which the target object selected by the user is located. For example, the first video frame image may comprise a to-be-selected subject A, a to-be-selected subject B, and a to-be-selected subject C, the to-be-selected subject A is on the left side of the first video frame image, the to-be-selected subject B is in the middle of the first video frame image, and the to-be-selected subject C is on the right side of the first video frame image. If the selected target object is the face of the to-be-selected subject B, the electronic device may determine the to-be-selected subject B as the target subject.

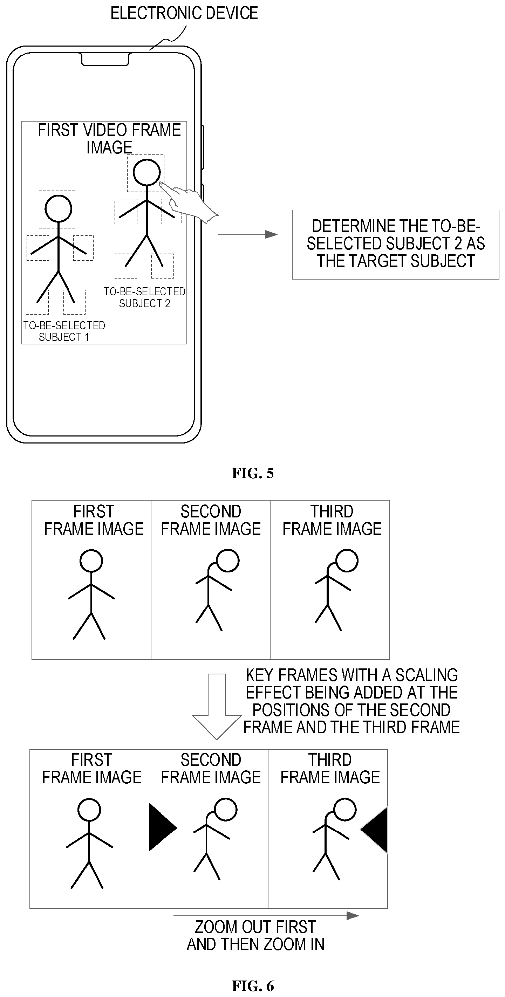

When the plurality of to-be-selected subjects are comprised in the first video frame image, the process of determining the target subject based on the target object selected by the user is described with reference to FIG. 5.

FIG. 5 is a schematic diagram of determining a target subject provided by an embodiment of the present disclosure. Referring to FIG. 5, an electronic device is included. The electronic device may display the first video frame image. The first video frame image may comprise a to-be-selected object 1 and a to-be-selected subject 2. The respective to-be-selected object of the respective to-be-selected subject may comprise a face, a left hand, a right hand, a left foot, and a right foot. And the first video frame image may comprise a respective selection box corresponding to the respective to-be-selected subject. If the user clicks the selection box corresponding to the face of the to-be-selected subject 2, the electronic device may determine that the target object in the first video frame image is a face, and then determine the to-be-selected subject 2 where the face is located as the target subject in the first video frame image.

It should be noted that, in the embodiment shown in FIG. 5, the first video frame image may comprise 2 to-be-selected subjects. Therefore, the sequence of the to-be-selected subjects in the first video frame image is from left to right: the first to-be-selected subject and the second to-be-selected subject. When the electronic device determines that the to-be-selected subject 2 is the target subject, the identity of the target subject is the second to-be-selected subject.

S203, based on a display position of the target object in the first video frame image, editing processing is performed on a video frame in the first video to obtain a second video.

Optionally, the electronic device may determine, based on any feasible implementation manner, a display position (for example, key point detection) of the target object in the first video frame image. The display position may be the display position of the center of the target object in the first video frame image (for example, the position of the center of the target object in the first video frame image may be the display position; the position of the human eye of the target object in the first video frame image may be the display position, etc. ), which is not limited in the embodiments of the present disclosure.

Optionally, the video frame image of the first video may comprise the second video frame image. The second video frame image may be another video frame image in the first video other than the first video frame image. For example, the first video may comprise a video frame image 1, a video frame image 2, a video frame image 3, and a video frame image 4. If the electronic device determines that the first video frame image in the first video may be the video frame image 3, the electronic device may determine that the second video frame image in the first video is the video frame image 1, the video frame image 2, and the video frame image 4.

The electronic device may obtain, based on the following feasible implementation manner, the second video: performing, based on the display position of the target object in the first video frame image, cropping processing and position movement processing on the second video frame image to obtain a third video frame image in the second video. A display position of the target object in the first video frame image is the same as the display position of the target object in the first video frame image. Obtaining the second video based on the first video frame image and a plurality of third video frame images.

Optionally, the second video may be a video with a camera movement effect. For example, the second video may be a video with a camera movement effect after the electronic device performs post-processing on the first video. The second video may comprise a plurality of third video frame images.

Optionally, the third video frame image may be a video frame image after the cropping processing and the position movement processing has been performed on the second video frame image is. For example, if the electronic device performs cropping processing on the second video frame image in the first video, and performs position movement processing on the video frame obtained after the cropping processing, to obtain the third video frame image. For example, the display position of the target object in the first video frame image is the center. If the display position of the target object in the second video frame image is the upper side, the electronic device may crop the lower region of the second video frame image, and move the cropped second video frame image downward to obtain the third video frame image. The display position of the target object in the third video frame image is the center of the third video frame image.

Optionally, the electronic device performs the editing processing on the video frame in the first video further comprises: performing scaling processing and/or rotation processing on the second video frame image in the first video. For example, if the display position of the target object in the plurality of consecutive second video frame images is the same as (or similar to, that is, the difference between the two display positions is less than a preset threshold) the display position of the target object in the first video frame image, the electronic device may perform the scaling processing and/or the rotation processing on the plurality of consecutive second video frame images. Therefore, the third video frame image in the second video is obtained, and the camera movement display effect of the second video is improved.

Optionally, the electronic device may perform, based on the manner of inserting the key frame, scaling processing and/or rotation processing on the second video frame image. For example, for the second video frame image 1, the second video frame image 2, and the second video frame image 3, the electronic device may insert a scaled key frame between the second video frame image 1 and the second video frame image 3. Therefore, when the electronic device plays the second video frame image 1, the second video frame image 2 and the second video frame image 3, a scaled camera movement display effect presents.

The process of adding the key frame is described below with reference to FIG. 6.

FIG. 6 is a schematic diagram of adding a key frame provided by an embodiment of the present disclosure. Referring to FIG. 6, a first frame image, a second frame image and a third frame image are included, and each frame image comprises a subject. The subject actions in the second frame image and the third frame image are the same. A key frame with a scaling effect is added at the positions of the second frame and the third frame. When the video is played, the effect between the second frame image and the third frame image is a scaling effect. That is, starting from the second frame of the video, the subject gradually zooms in, and starting from the third frame of the video, the subject gradually zooms out until it reaches the size of the third frame image. In this way, even if the action of the subject between the plurality of image frames does not change, the animation effect can be added through the key frame, thereby improving the playing effect of the video.

Optionally, after obtaining the plurality of third video frame images, the electronic device may concatenate the plurality of third video frame images and the first video frame image to obtain the second video. For example, the first video comprises a video frame image 1, a video frame image 2, and a video frame image 3 (arranged in a play order). If the first video frame image is the video frame image 2, the second video frame image may be the video frame image 1 and the video frame image 3. The electronic device may perform, based on the display position of the target object in the video frame image 2 and the display position of the target object in the video frame image 1, a cropping and a movement on the video frame image 1 to obtain the video frame image A (the third video frame image 1). perform, based on the display position of the target object in the video frame image 2 and the display position of the target object in the video frame image 3, a cropping and a movement on the video frame image 3 to obtain the video frame image B (the third video frame image 2). The electronic device may concatenate the video frame image A, the video frame image 2, and the video frame image B to obtain the second video. The second video may have a camera movement effect, thereby reducing the difficulty and the cost of obtaining the video with a camera movement effect.

The embodiment of the invention provides a video processing method, the electronic device may obtain a first video frame image in a first video, and detect to-be-selected objects in the first video frame image, and determine the position of the respective to-be-selected object in the first video frame image. Generating, based on the respective position of the respective to-be-selected object in the first video frame image, in the first video frame image, a respective selection box corresponding to the respective to-be-selected object. Determining, in response to the touch operation on the selection box, the to-be-selected object corresponding to the selection box as the target object. The electronic device may perform, based on the display position of the target object in the first video frame image, cropping processing and position movement processing on the second video frame image to obtain the third video frame image in the second video. So that the display position of the target object in the third video frame image is the same as the display position of the target object in the first video frame image. And obtaining the second video, based on the first video frame image and the plurality of third video frame images. In this way, because the electronic device may be based on the video post-processing manner, the second video with the camera movement effect may be obtained. Therefore, the user can obtain the video with the camera movement effect without much camera movement experience, and the difficulty of obtaining the camera movement video is reduced. In the process of obtaining the camera movement video, there is no need to install a device that assists in shooting the camera movement video, thereby reducing the cost of obtaining the camera movement video.

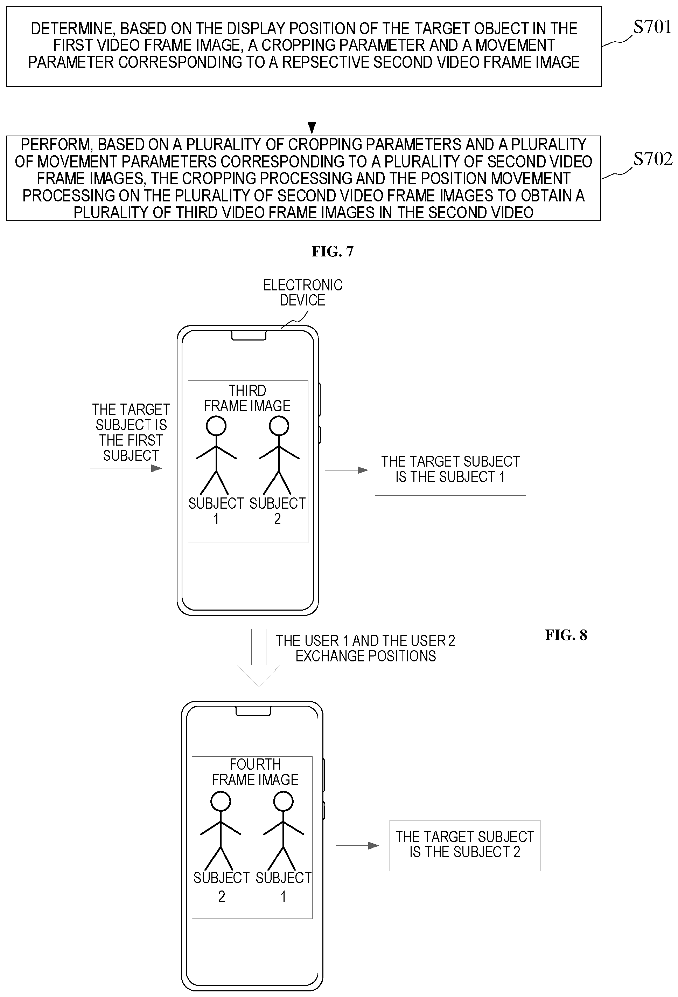

Based on the embodiment shown in FIG. 2, foregoing video processing method that, performing, based on the display position of the target object in the first video frame image, cropping processing and position movement processing on the second video frame image to obtain a third video frame image in the second video, is described in detail with reference to FIG. 7.

FIG. 7 is a schematic diagram of a method for determining a third video frame image provided by an embodiment of the present disclosure. Referring to FIG. 7, the method process comprises the followings.

S701, based on the display position of the target object in the first video frame image, a cropping parameter and a movement parameter corresponding to a respective second video frame image are determined.

The cropping parameter may indicate a to-be-cropped region in the second video frame image. For example, if the region indicated by the cropping parameter is the upper half region of the second video frame image, the to-be-cropped region in the second video frame image may be the upper half region. If the region indicated by the cropping parameter is the left half part region of the second video frame image, the to-be-cropped region in the second video frame image may be the left half part region.

The movement parameter may indicate a moving direction and a moving distance on the second video frame image. For example, if the movement parameter is moving 10 pixel units to the right, the electronic device may determine that the movement direction of the second video frame image is the right, and the movement distance is 10 pixel units. If the movement parameter is moving upwards by 20 pixel units, the electronic device may determine that the movement direction of the second video frame image is upward and the movement distance is 20 pixel units.

It should be noted that the movement parameter in the embodiments of the present disclosure may be a movement parameter of the second video frame image, or may be a movement parameter of the cropped image obtained after the cropping processing is performed on the second video frame image. This is not limited in the embodiments of the present disclosure.

The electronic device determines, based on the display position of the target object in the first video frame image, a cropping parameter and a movement parameter corresponding to a respective second video frame image. It may be specifically: determining a display position of the target object in the respective second video frame image. And determining, based on the display position of the target object in the first video frame image and display positions of the target object in the plurality of second video frame images, cropping parameters and movement parameters corresponding to the plurality of second video frame images.

The electronic device may determine, based on the following feasible implementation manner, the display position of the target object in the respective second video frame image: for any one of the second video frame images, determining the target object in the second video frame image. A plurality of key points corresponding to the target object are determined. Based on the plurality of key points, a display position of the target object in the second video frame image is determined.

For example, if the target object is a face, the electronic device may process, based on the face detection algorithm, the second video frame image (also processing the cropped image comprising the face, which is not limited in the embodiment of the present disclosure). Further, a plurality of face key points corresponding to the face in the second video frame image and a respective coordinate of each face key point in the second video frame image may be obtained. The electronic device may determine, based on the coordinates of the plurality of face key points in the second video frame image, the display position of the target object in the second video frame image.

For example, if the target object is a left hand, the electronic device may process, based on the limb detection algorithm, the second video frame image (also processing the cropped image comprising the left hand, which is not limited in the embodiment of the present disclosure). Further, a plurality of limb key points corresponding to the left hand in the second video frame image and a respective coordinate of each limb key point in the second video frame image may be obtained. The electronic device may determine, based on the coordinates of the plurality of limb key points in the second video frame image, the display position of the target object in the second video frame image.

It should be noted that the standard for determining the display position of the target object in the second video frame image by the electronic device is the same as the standard for determining the display position of the target object in the first video frame image by the electronic device. For example, if the electronic device determines the position of the center of the target object in the first video frame image as the display position of the target object in the first video frame image. Then, the electronic device may determine the position of the center of the target object in the second video frame image as the display position of the target object in the second video frame image. For example, the target object is a face. If the electronic device determines the position of the left eye of the face in the first video frame image as the display position of the face in the first video frame image. The electronic device may determine the position of the left eye of the face in the second video frame image as the display position of the face in the second video frame image.

It should be noted that, after the electronic device obtains the key point of the target object through the Bach algorithm, the electronic device may further fuse the position of the key point of the target object and the position of the selection box of the target object through the Lens algorithm. In this way, the stability of key point locking can be improved.

It should be noted that, when the electronic device locks the position of the target object, the processing may start from the first video frame image in the first video. Therefore, the electronic device may obtain the target object in each video frame image in the first video.

The electronic device determining the target object in the second video frame image, has the following two cases:
Case 1: the first video frame image is the initial frame video frame image in the first video.

Optionally, if the first video frame image is the initial frame video frame image in the first video, the electronic device may determine, based on the target object and the target body where the target object is located, the respective target object in the respective second video frame image. For example, when the first video frame image is the 1st frame image in the first video, the electronic device may determine, based on the target object of the target subject determined by the user in the first video frame image, the target object in the second video frame image sequentially.

Optionally, the first video frame image and the second video frame image may comprise at least one to-be-selected subject. The electronic device may determine, based on the identifier of the target subject in which the target object in the first video frame image is located, a respective target subject in the respective second video frame image, and further determine a respective target object in the respective second video frame image. For example, if the first video comprises 1 to-be-selected subjects, the electronic device may determine that the target subject in the first video frame image and the second video frame image may be the to-be-selected subject. If the first video comprises 3 to-be-selected subjects, and the target subject in the first video frame image is the second to-be-selected subject (the order may be from left to right or from right to left, which is not limited in the embodiments of the present disclosure), the electronic device may determine that the target subject in the second video frame image is also the second to-be-selected subject.

Optionally, after determining the target subject in the second video frame image, the electronic device may detect the target subject in the target subject. For example, if the target object in the first video frame image is the face of the target subject, the electronic device may determine that the respective target object in the respective second video frame image is the face of the respective target subject. For example, the first video comprises 3 to-be-selected subjects, the target subject in the first video frame image is the second to-be-selected subject. The target subject is the face of the second to-be-selected subject, then the electronic device may determine that the respective target subject in the respective second video frame image may be the face of the second to-be-selected subject.

Optionally, the electronic device may detect the target object in the second video frame image. For example, the electronic device may process the second video frame image based on the Bach algorithm, to obtain the target object in the second video frame image, which is not limited in the embodiments of the present disclosure.

It should be noted that the positions of the plurality of to-be-selected subjects in the first video may be exchanged, however, the position of the target subject does not change. For example, the first video frame image comprises the to-be-selected subject 1 and the to-be-selected subject 2, the target subject is the second to-be-selected subject (the to-be-selected subject 2, and the to-be-selected subject 2 is located on the right side of the to-be-selected subject 1). If the to-be-selected subject 2 moves to the left side of the to-be-selected subject 1 in any one frame of video frame image of the first video, the target subject is the second to-be-selected subject in the frame video frame image. However, the second to-be-selected subject is the to-be-selected subject 1.

The target subject is described below with reference to FIG. 8.

FIG. 8 is a schematic diagram of a target subject provided by an embodiment of the present disclosure. Referring to FIG. 8, an electronic device is included. The electronic device may display a third frame image in the first video. The third frame image comprises a subject 1 and a subject 2. In the third frame image, the subject 1 is the first subject, and the subject 2 is the second subject. If the electronic device determines that the target subject of the first video frame image is the subject 1, the electronic device determines that the target subject in the third frame image is the subject 1. In the fourth frame image, the subject 1 and the subject 2 exchange positions, the subject 2 becomes the first subject, and the subject 1 becomes the second subject. Therefore, in the 4th frame image, the electronic device may determine that the target subject is the subject 2.

It should be noted that, in an actual application process, if the target subject is the first subject, the electronic device only need to detect any subject at the position of the first subject in the second video frame image is detected. There is no need to determine whether the subject is the same as the target subject.

Case 2: the first video frame image is the Nth frame image in the first video.

If the first video frame image is the Nth frame image in the first video (N is an integer greater than 0), the electronic device may determine, based on the forward frame backtracking manner, the respective target object in the respective second video frame image in the first N-1 frames. For example, if the first video frame image is the fifth frame video frame image, the electronic device has determined the respective target object in the respective second video frame image of the first 4 frames. Therefore, the electronic device may determine, based on the forward frame backtracking manner, the target object in the second video frame image of the first 4 frame. For the second video frame image after the fifth frame, the electronic device may determine, based on the method in the case 1, the target subject and the target object in the second video frame image after the fifth frame. This is not limited in the embodiments of the present disclosure.

In this case, since the electronic device backtracks the forward frame, the respective target object in the respective second video frame image of the first N-1 frames may be obtained. Therefore, when performing editing processing on each video frame image in the first video, if the second video frame image is the first N-1 frames, the electronic device may directly determine the target object in the second video frame image. Therefore, system resources can be saved, and the accuracy of determining the target object can be improved.

It should be noted that the forward frame backtracking manner may be specifically: the electronic device may perform, based on the target object of the first video frame image, performing an inter-frame matching processing on the video frame image of the first N-1 frames sequentially, to obtain the target object in the video frame image of the first N-1 frames.

It should be noted that, if the first video frame image is the initial frame image in the first video, the electronic device may detect, based on the target object in the first video frame image, the respective target object in the respective second video frame image, which is not limited in the embodiments of the present disclosure.

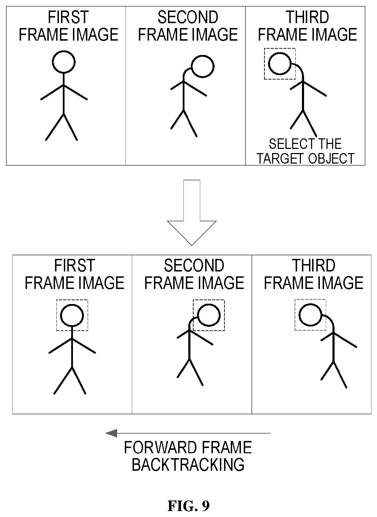

A scenario of backtracking forward frames is described below with reference to FIG. 9.

FIG. 9 is a schematic diagram of forward frame backtracking provided by an embodiment of the present disclosure. Referring to FIG. 9, a first frame image, a second frame image, and a third frame image are included. Each frame image comprises a subject, and the subject action in each frame image is different. If the user selects the target object as the face of the subject in the third frame image, the electronic device (not shown in FIG. 9) may perform inter-frame matching on the second frame image and the first frame image, and further determine the face of the subject in the second frame image. After obtaining the face in the second frame image, the electronic device may perform inter-frame matching on the second frame image and the first frame image, and further determine the face of the subject in the first frame image. the target object of the first frame image and the second frame image is further obtained.

Based on the display position of the target object in the first video frame image and the display position of the target object in the plurality of second video frame images, the cropping parameters and the movement parameters corresponding to the plurality of second video frame images are determined. It may be specifically: for any second video frame image, based on the image deformation algorithm, the display position of the target object in the first video frame image and the display position of the target object in the second video frame image are processed, to obtain the cropping parameter and the movement parameter corresponding to the respective second video frame image. For example, the electronic device may process, based on the image Warp algorithm, the display position of the target object in the second video frame image and the display position of the target object in the first video frame image, to further obtain the cropping parameter and the movement parameter corresponding to the second video frame image. Further, based on the cropping parameter and the movement parameter, cropping processing and position movement processing may be performed on the second video frame image. In addition, the electronic device may display the processed second video frame image (i.e., the third video frame image in the second video), to facilitate the user to preview the processing result.

S702, based on a plurality of cropping parameters and a plurality of movement parameters corresponding to a plurality of second video frame images, the cropping processing and the position movement processing are performed on the plurality of second video frame images to obtain a plurality of third video frame images in the second video.

The electronic device may obtain, based on the following feasible implementation manners, a plurality of third video frame images in the second video: performing, starting from an initial frame of the plurality of second video frame images, the cropping processing and the position movement processing on the plurality of second video frame image sequentially to obtain a plurality of third video frame images in the second video.

For example, when the electronic device locks, based on the Lens algorithm, the target object in the first video (that is, each video frame is processed, so that the obtained second video has the effect of the target object being locked), the Lens algorithm needs to start processing from the first frame image of the first video. Therefore, the electronic device may process the second video frame image sequentially. For example, if the first video frame image is the first frame image in the first video, the electronic device may process, based on the cropping parameter and the movement parameter corresponding to the second frame image (the second video frame image), the second frame image to obtain the processed image (the third video frame image in the second video) corresponding to the second frame image. The electronic device may process, based on the cropping parameter and the movement parameter corresponding to the third frame image, the third frame image to obtain the processed image corresponding to the third frame image. The above steps are repeated until all the second video frame images are processed, and the electronic device may obtain the second video.

It should be noted that, when the electronic device processes the second video frame image, for each second video frame image processed by the electronic device, it can display the third video frame image corresponding to the second video frame image. The electronic device may also display a plurality of third video frame images corresponding to a plurality of second video frame images after processing the plurality of second video frame images. This is not limited in the embodiments of the present disclosure. This can facilitate user preview and enhance the user experience. In addition, the electronic device may perform, through the real-time trajectory anti-shake technology, smoothing processing on the plurality of key points of the locked target object, thereby improving the stability of the video.

Optionally, after the electronic device obtains the second video, the electronic device may play the second video so that the user can preview. The electronic device may adjust the second video based on the operation of the user. For example, the user may perform operations such as rotating, scaling, and offsetting on each third video frame image of the second video. The electronic device may relock, in response to the operation of the user, the target object in the third video frame image through the Lens algorithm. For example, if the user rotates the first frame image in the second video, the electronic device may perform rotation processing on the first frame image to obtain the rotated first frame image. It should be noted that, after the user modifies the third video frame image, the electronic device performs smoothing and anti-shake processing on the user modified result, thereby improving the video effect.

Optionally, when the electronic device processes the respective second video frame image through an image Warp, the electronic device may determine the cropping ratio, to further constrain the Warp matrix calculation, and implement the technical effect of adaptively removing the black edge of the image frame, and improve the display effect of the second video. Optionally, when the electronic device locks the target object, the locking scale of the target object of each image frame may remain unchanged, thereby improving stability of the locking processing.

It should be noted that the electronic device may determine a target object of the respective second video frame image and a cropping parameter and a movement parameter corresponding to a respective second video frame image frame by frame, and process the second video frame image based on the cropping parameter and the movement parameter. For example, if the user selects the face of the subject in the fifth frame image of the first video, the electronic device may obtain, through backtracking, the face of the subject of the first frame to the fourth frame. The first frame image to fourth frame images are processed based on the cropping parameters and the movement parameters of the first frame image to fourth frame images. When the electronic device processes the sixth frame image, the electronic device determines a position of the target object of the sixth frame image in the sixth frame image, and determines a movement parameter and a cropping parameter of the sixth frame image. The electronic device processes the sixth frame image based on the movement parameter and the cropping parameter of the sixth frame image. At the end of the processing of the sixth frame, the electronic device processes the seventh frame image. In this way, for subsequent frames, after the electronic device processes one frame image, it then proceeds to process the next frame image. Thus, it can provide real-time feedback on the processing results of each frame image, thereby enhancing the effect of the second video.

Embodiments of the present disclosure provide a method for determining a third video frame image, which determines a display position of the target object in the respective second video frame image. Based on the display position of the target object in the first video frame image and display positions of the target object in the plurality of second video frame images, cropping parameters and movement parameters corresponding to the plurality of second video frame images are determined. Starting from an initial frame of the plurality of second video frame images, the cropping processing and the position movement processing are performed on the plurality of second video frame image sequentially to further obtain a plurality of third video frame images in the second video, to further obtain the second video. In this way, the electronic device may start editing processing from the initial frame of video frame image of the first video, and a result of the editing processing of each frame of the second video frame image may be displayed in time, thereby improving the effect of the second video. In addition, the electronic device does not need to install the auxiliary shooting device, so that the second video with the camera movement effect can be obtained, and the cost of obtaining the camera movement video is reduced.

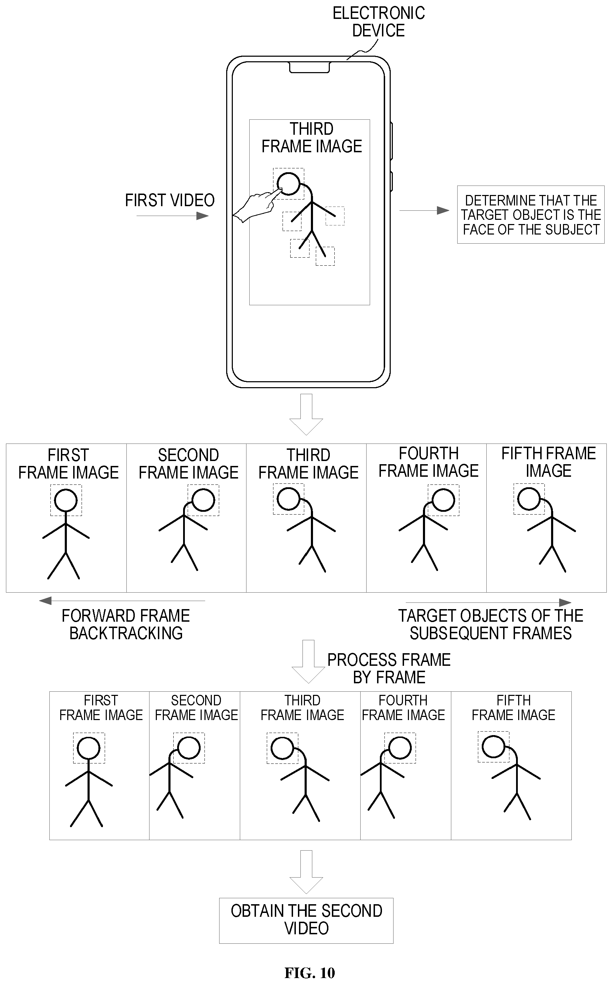

Based on any one of the foregoing embodiments, a process of the foregoing video processing method is described below with reference to FIG. 10.

FIG. 10 is a schematic process diagram of a video processing method provided by an embodiment of the present disclosure. Referring to FIG. 10, an electronic device is included. After receiving the first video, the electronic device may play the first video. When the first video is played to the third frame image, the third frame image may comprise a subject, a selection box of the subject face, and a selection box of the left hand of the subject, a selection box of the right hand of the subject, a selection box of the left leg of the subject, and a selection box of the right leg of the subject.

Referring to FIG. 10, when a user clicks a selection box of a subject face, the electronic device determines that the target object is a face of the subject. The electronic device may obtain, through the manner of forward frame backtracking the forward frame, the position of the face of the subject in the first frame image and the position of the face of the subject in the second frame image. The electronic device determines, based on the face of the subject selected by the user, the position of the face of the subject in the fourth frame image and the position of the face of the subject in the fifth frame image.

Referring to FIG. 10, the electronic device may determine a cropping parameter and a movement parameter corresponding to a respective image frame, and process the first frame image based on the cropping parameter and the movement parameter corresponding to the first frame image. The second frame image is processed based on the cropping parameter and the movement parameter corresponding to the second frame image. The fourth frame image is processed based on the cropping parameter and the movement parameter corresponding to the fourth frame image. The fifth frame image is processed based on the cropping parameter and the movement parameter corresponding to the fifth frame image. Then, the second video is obtained. In this way, the respective display position of the face in each video frame image in the second video is the same, so that the effect of the camera movement is achieved, and the difficulty of obtaining the camera movement video is reduced. In addition, there is no need to install the auxiliary shooting device, and the cost of obtaining the camera movement video is reduced.

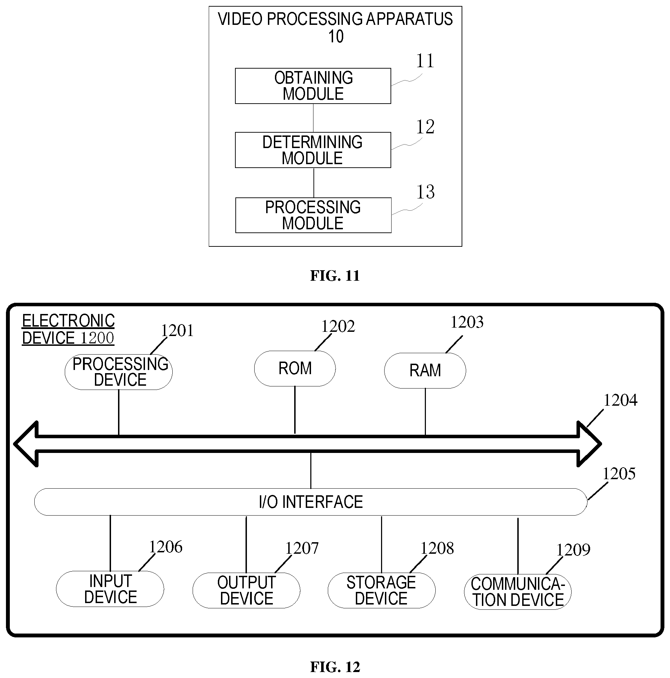

FIG. 11 is a schematic structural diagram of a video processing apparatus provided by an embodiment of the present disclosure. Referring to FIG. 11, the video processing apparatus 10 comprises an obtaining module 11, a determining module 12, and a processing module 13, where: the obtaining module 11 is configured to obtain a first video frame image in a first video; the determining module 12 is configured to determine a target object in the first video frame image; the processing module 13 is configured to perform, based on a display position of the target object in the first video frame image, editing processing on a video frame in the first video to obtain a second video; a display position of the target object in a video frame image of the second video is the same as a display position of the target object in the first video frame image.

According to one or more embodiments of the present disclosure, the processing module 13 is specifically configured to: perform, based on the display position of the target object in the first video frame image, cropping processing and position movement processing on the second video frame image to obtain a third video frame image in the second video, so that a display position of the target object in the third video frame image being the same as the display position of the target object in the first video frame image; obtain the second video based on the first video frame image and a plurality of third video frame images.

According to one or more embodiments of the present disclosure, the processing module 13 is specifically configured to: perform scaling processing and/or rotation processing on the second video frame image in the first video.

According to one or more embodiments of the present disclosure, the processing module 13 is specifically configured to: determine, based on the display position of the target object in the first video frame image, a cropping parameter and a movement parameter corresponding to a respective second video frame image; perform, based on a plurality of cropping parameters and a plurality of movement parameters corresponding to a plurality of second video frame images, the cropping processing and the position movement processing on the plurality of second video frame images to obtain a plurality of third video frame images in the second video.

According to one or more embodiments of the present disclosure, the processing module 13 is specifically configured to: determine a display position of the target object in the respective second video frame image; determine, based on the display position of the target object in the first video frame image and display positions of the target object in the plurality of second video frame images, cropping parameters and movement parameters corresponding to the plurality of second video frame images.

According to one or more embodiments of the present disclosure, the processing module 13 is specifically configured to: for any one of the second video frame images; determining the target object in the second video frame image, and determine a plurality of key points corresponding to the target object; determine, based on the plurality of key points, a display position of the target object in the second video frame image.

According to one or more embodiments of the present disclosure, the processing module 13 is specifically configured to perform, starting from an initial frame of the plurality of second video frame images, the cropping processing and the position movement processing on the plurality of second video frame image sequentially.

According to one or more embodiments of the present disclosure, the obtaining module 11 is specifically configured to: detect to-be-selected objects in the first video frame image, and determining a respective position of the respective to-be-selected object in the first video frame image; generate, in the first video frame image, based on the respective position of the respective to-be-selected object in the first video frame image, a respective selection box corresponding to the respective to-be-selected object; determine, in response to a touch operation on the selection box, a to-be-selected object corresponding to the selection box as the target object.

The video processing apparatus provided by embodiments of the present disclosure is able to be configured to perform the technical solutions in the foregoing method embodiments, and implementation principles and technical effects thereof are similar, and details are not described herein again in this embodiment.

FIG. 12 is a schematic structural diagram of an electronic device provided by an embodiment of the present disclosure. FIG. 12 illustrates a schematic structural diagram of an electronic device 1200 suitable for implementing embodiments of the present disclosure. The electronic device 1200 may be an electronic device or a server. The electronic device may include, but is not limited to, a mobile terminal such as a mobile phone, a notebook computer, a digital broadcast receiver, a Personal Digital Assistant (PDA), a Portable Android Device (PAD), a Portable Media Player (PMP), an in-vehicle terminal (for example, an in-vehicle navigation terminal), and a fixed terminal such as a digital TV, a desktop computer, or the like. The electronic device shown in FIG. 12 is merely an example, and should not impose any limitation on the functions and scope of use of the embodiments of the present disclosure.

As shown in FIG. 12, the electronic device 1200 may comprise a processing device (for example, a central processor, a graphics processor, etc.) 1201, which may perform various appropriate actions and processing based on a program stored in a read only memory (ROM) 1202 or a program loaded into a random access memory (RAM) 1203 from a storage device 1208. In the RAM 1203, various programs and data required by the operation of the electronic device 1200 are also stored. The processing device 1201, the ROM 1202, and the RAM 1203 are connected to each other through a bus 1204. Input/output (I/O) interface 1205 is also connected to bus 1204.

Generally, the following devices may be connected to the I/O interface 1205: an input device 1206 comprising, for example, a touch screen, a touch pad, a keyboard, a mouse, a camera, a microphone, an accelerometer, a gyroscope, etc.; an output device 1207 comprising, for example, a Liquid Crystal Display (LCD), a speaker, a vibrator, etc.; a storage device 1208 comprising, for example, a magnetic tape, a hard disk, etc.; and a communication device 1209. The communication device 1209 may allow the electronic device 1200 to communicate wirelessly or wired with other devices to exchange data. While FIG. 12 shows an electronic device 1200 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure comprise a computer program product comprising a computer program embodied on a computer readable medium, the computer program containing program code for performing the method shown in the flowchart. In such embodiments, the computer program may be downloaded and installed from the network through the communication device 1209, or installed from the storage device 1208, or installed from the ROM 1202. When the computer program is executed by the processing device 1201, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, apparatus, or means, or any combination thereof. More specific examples of computer-readable storage media may include, but are not limited to, an electrical connection having one or more wires, a portable computer magnetic disk, a hard disk, a random access memory (RAM), a read-only memory (ROM), an erasable programmable read-only memory (EPROM or Flash memory), an optical fiber, a portable compact disc read-only memory (CD-ROM), an optical storage means, a magnetic storage means, or any suitable combination of the foregoing. In the present disclosure, a computer-readable storage medium may be any tangible medium containing or storing a program that may be used by or in connection with an instruction execution system, apparatus, or means. In the present disclosure, a computer readable signal medium may comprise a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or means. The program code contained in the computer-readable medium may be transmitted with any suitable medium, including, but not limited to: wires, optical cables, RF (radio frequency), and the like, or any suitable combination of the foregoing.

The computer-readable medium described above may be comprised in the above electronic device; or may be separately present without being assembled into the electronic device.

The computer-readable medium carries one or more programs, and when the one or more programs are executed by the electronic device, causing the electronic device to perform the method shown in the foregoing embodiments.

Optionally, an embodiment of the present disclosure provides a computer-readable storage medium, storing a computer-executable instruction, when a processor executes the computer-executable instruction, implementing the video processing method shown in the foregoing embodiment.

Optionally, an embodiment of the present disclosure provides a computer program product, comprising a computer program, when executed by a processor, implementing the video processing method shown in the foregoing embodiment.

Computer program code for performing the operations of the present disclosure may be written in one or more programming languages, comprising object oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer and partially on a remote computer, or entirely on a remote computer or server. In the case of a remote computer is involved, the remote computer may be connected to the user computer or may be connected to an external computer (for example, using an Internet service provider for Internet connection) through any kind of network, comprising a local area network (LAN) or a wide area network (WAN).

The flowcharts and block diagrams in the figures illustrate system architecture, functionality, and operation of systems, methods, and computer program products that can be implemented according to various embodiments of the present disclosure. In this regard, each block in the flowchart or block diagram may represent a module, program segment, or portion of code that contains one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented with a combination of dedicated hardware and computer instructions.

The units involved in the embodiments of the present disclosure may be implemented in software, or may be implemented in hardware. The name of the unit does not constitute a limitation on the unit itself, for example, the first obtaining unit may be further described as "the unit that obtaining at least two Internet Protocol addresses".

The functions described above may be performed, at least in part, by one or more hardware logic components. For example, without limitation, example types of hardware logic components that may be used include: field programmable gate arrays (FPGAs), application specific integrated circuits (ASICs), application specific standard products (ASSPs), system on chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may comprise, but is not limited to, electronic, magnetic, optical, electromagnetic, infrared, or semiconductor systems, apparatus, or devices, or any suitable combination of the foregoing. More specific examples of machine-readable storage media may comprise electrical connection having one or more wires, a portable computer disk, a hard disk, a random access memory (RAM), a read-only memory (ROM), an erasable programmable read-only memory (EPROM or Flash memory), an optical fiber, a portable compact disc read-only memory (CD-ROM), an optical storage means, a magnetic storage means, or any suitable combination of the foregoing.

It should be noted that the modification of "a" and "a plurality" mentioned in this disclosure is illustrative and not limiting, and those skilled in the art should understand that "one or more" should be understood unless the context clearly indicates.

The names of messages or information exchanged between multiple apparatuses in embodiments of the present disclosure are for illustrative purposes only and are not intended to limit the scope of such messages or information.

It can be understood that, before the technical solutions disclosed in the embodiments of the present disclosure are used, the types, the usage scope, the usage scenario and the like of personal information related to the present disclosure should be notified to the user in an appropriate manner according to the relevant laws and regulations and the authorization of the user shall be obtained.

For example, send, in response to receiving an active request from a user, prompt information to the user to explicitly remind the user that the requested operation will need to acquire and use the personal information of the user. Therefore, the user can autonomously select whether to provide personal information to software or hardware (such as terminal devices, applications, servers, or storage medium) executing the operation of the technical solution of the present disclosure according to the prompt information.

As an optional but non-limiting implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "not agree" to provide personal information to the terminal device.

It may be understood that the foregoing notification and the process of obtaining a user authorization is merely illustrative, and does not constitute a limitation on implementations of the present disclosure, and other manners of meeting related laws and regulations may also be applied to implementations of the present disclosure.

It may be understood that the data involved in the technical solution (including but not limited to the data itself, the acquisition or use of the data) should follow the requirements of the corresponding laws and regulations and relevant provisions. The data may comprise information, parameters, messages, and the like, such as flow cut indication information.

The above description is merely an illustration of the preferred embodiments of the present disclosure and the principles of the application. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the technical solutions formed by above features mutually replacing technical features disclosed in the present disclosure (but not limited to) which have similar functions.

Further, while operations are depicted in a particular order, this should not be understood to require that these operations be performed in the particular order shown or in sequential order. In certain circumstances, multitasking and parallel processing may be advantageous. Likewise, while several specific implementation details are comprised in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable sub-combination.

Although the present subject matter has been described in language specific to structural features and/or methodological acts, it is to be understood that the subject matter defined in the appended claims is not necessarily limited to the specific features or acts described above. Rather, the specific features and acts described above are merely illustrative forms of implementing the claims.

According to a first aspect, one or more embodiments of the present disclosure provide a video processing method, and the method comprises: obtaining a first video frame image in a first video; determining a target object in the first video frame image; performing, based on a display position of the target object in the first video frame image, editing processing on a video frame in the first video to obtain a second video, wherein display positions of the target object in video frame images of the second video are the same as the display position of the target object in the first video frame image.

According to one or more embodiments of the present disclosure, video frame images of the first video comprises a second video frame image; performing, based on the display position of the target object in the first video frame image, the editing processing on the video frame in the first video to obtain the second video comprising: performing, based on the display position of the target object in the first video frame image, cropping processing and position movement processing on the second video frame image to obtain a third video frame image in the second video, such that a display position of the target object in the third video frame image is the same as the display position of the target object in the first video frame image; obtaining the second video based on the first video frame image and a plurality of third video frame images.

According to one or more embodiments of the present disclosure, performing the editing processing on the video frame in the first video further comprises: performing scaling processing and/or rotation processing on the second video frame image in the first video.

According to one or more embodiments of the present disclosure, performing, based on the display position of the target object in the first video frame image, the cropping processing and the position movement processing on the second video frame image to obtain the third video frame image in the second video comprises: determining, based on the display position of the target object in the first video frame image, a cropping parameter and a movement parameter corresponding to a respective second video frame image; performing, based on a plurality of cropping parameters and a plurality of movement parameters corresponding to a plurality of second video frame images, the cropping processing and the position movement processing on the plurality of second video frame images to obtain a plurality of third video frame images in the second video.

According to one or more embodiments of the present disclosure, determining, based on the display position of the target object in the first video frame image, the cropping parameter and the movement parameter corresponding to the respective second video frame image comprises: determining a display position of the target object in the respective second video frame image; determining, based on the display position of the target object in the first video frame image and display positions of the target object in the plurality of second video frame images, cropping parameters and movement parameters corresponding to the plurality of second video frame images.

According to one or more embodiments of the present disclosure, determining the display position of the target object in the respective second video frame image comprises: for any one of the second video frame images; determining the target object in the second video frame image, and determining a plurality of key points corresponding to the target object; determining, based on the plurality of key points, the display position of the target object in the second video frame image.

According to one or more embodiments of the present disclosure, performing, based on the plurality of cropping parameters and the plurality of movement parameters corresponding to the plurality of second video frame images, the cropping processing and the position movement processing on the plurality of second video frame images comprises: performing, starting from an initial frame of the plurality of second video frame images, the cropping processing and the position movement processing on the plurality of second video frame images sequentially.

According to one or more embodiments of the present disclosure, determining the target object in the first video frame image comprises: detecting to-be-selected objects in the first video frame image, and determining a position of a respective to-be-selected object in the first video frame image; generating a selection box corresponding to the respective to-be-selected object in the first video frame image based on the position of the respective to-be-selected object in the first video frame image; determining, in response to a touch operation on the selection box, a to-be-selected object corresponding to the selection box as the target object.

According to a second aspect, one or more embodiments of the present disclosure provide a video processing apparatus, comprising an obtaining module, a determining module and a processing module, where: the obtaining module is configured to obtain a first video frame image in a first video; the determining module is configured to determine a target object in the first video frame image; the processing module is configured to perform, based on a display position of the target object in the first video frame image, editing processing on a video frame in the first video to obtain a second video, wherein display positions of the target object in video frame images of the second video are the same as the display position of the target object in the first video frame image.

According to one or more embodiments of the present disclosure, the processing module is specifically configured to: performing, based on the display position of the target object in the first video frame image, the cropping processing and a position movement processing on the second video frame image to obtain a third video frame image in the second video, such that a display position of the target object in the third video frame image is the same as the display position of the target object in the first video frame image; obtaining the second video based on the first video frame image and a plurality of third video frame images.

According to one or more embodiments of the present disclosure, the processing module is specifically configured to perform scaling processing and/or rotation processing on the second video frame image in the first video.

According to one or more embodiments of the present disclosure, the processing module is specifically configured to: determining, based on the display position of the target object in the first video frame image, a cropping parameter and a movement parameter corresponding to a respective second video frame image; performing, based on a plurality of cropping parameters and a plurality of movement parameters corresponding to a plurality of second video frame images, the cropping processing and the position movement processing on the plurality of second video frame images to obtain a plurality of third video frame images in the second video.

According to one or more embodiments of the present disclosure, the processing module is specifically configured to: determining a display position of the target object in the respective second video frame image; determining, based on the display position of the target object in the first video frame image and display positions of the target object in the plurality of second video frame images, cropping parameters and movement parameters corresponding to the plurality of second video frame images.

According to one or more embodiments of the present disclosure, the processing module is specifically configured to: for any one of the second video frame images; determining the target object in the second video frame image, and determining a plurality of key points corresponding to the target object; determining, based on the plurality of key points, the display position of the target object in the second video frame image.

According to one or more embodiments of the present disclosure, the processing module is specifically configured to: performing, starting from an initial frame of the plurality of second video frame images, the cropping processing and the position movement processing on the plurality of second video frame images sequentially.

According to one or more embodiments of the present disclosure, the obtaining module is specifically configured to: detecting to-be-selected objects in the first video frame image, and determining a position of a respective to-be-selected object in the first video frame image; generating a selection box corresponding to the respective to-be-selected object in the first video frame image based on the position of the respective to-be-selected object in the first video frame image; determining, in response to a touch operation on the selection box, a to-be-selected object corresponding to the selection box as the target object.

According to a third aspect, an embodiment of the present disclosure provides an electronic device, comprising: a processor and a memory; the memory storing computer executable instructions; the processor executing the computer-executable instructions stored by the memory, so that the processor performs the video processing method involved in the above first aspect and various possibilities of the first aspect.

According to a fourth aspect, an embodiment of the present disclosure provides a computer-readable storage medium storing computer-executable instructions which, when a processor executes the computer-executable instructions, implement the video processing method involved in the above first aspect and various possibilities of the first aspect.

According to a fifth aspect, an embodiment of the present disclosure provides a computer program product, comprising a computer program, when executed by a processor, implements the video processing method involved in the above first aspect and various possibilities of the first aspect.

The above description is merely an illustration of the preferred embodiments of the present disclosure and the principles of the application. It should be understood by those skilled in the art that the disclosure scope involved in the disclosure in the present disclosure is not limited to the technical solutions of the specific combination of the above technical features, and should also cover other technical solutions formed by any combination of the above technical features or their equivalent features without departing from the above disclosed concept. For example, the technical solutions formed by above features mutually replacing technical features disclosed in the present disclosure (but not limited to) which have similar functions.

Further, while operations are depicted in a particular order, this should not be understood to require that these operations be performed in the particular order shown or in sequential order. In certain circumstances, multitasking and parallel processing may be advantageous. Likewise, while several specific implementation details are comprised in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable sub-combination.

Although the present subject matter has been described in language specific to structural features and/or methodological acts, it is to be understood that the subject matter defined in the appended claims is not necessarily limited to the specific features or acts described above. Rather, the specific features and acts described above are merely illustrative forms of implementing the claims.

## Claims

1. A video processing method, comprising:
obtaining a first video frame image in a first video;
determining a target object in the first video frame image;
performing, based on a display position of the target object in the first video frame image, editing processing on a video frame in the first video to obtain a second video, wherein display positions of the target object in video frame images of the second video are the same as the display position of the target object in the first video frame image.

2. The method of claim 1, wherein video frame images of the first video comprises a second video frame image;
performing, based on the display position of the target object in the first video frame image, the editing processing on the video frame in the first video to obtain the second video comprising:
performing, based on the display position of the target object in the first video frame image, cropping processing and position movement processing on the second video frame image to obtain a third video frame image in the second video, such that a display position of the target object in the third video frame image is the same as the display position of the target object in the first video frame image;
obtaining the second video based on the first video frame image and a plurality of third video frame images.

3. The method of claim 2, wherein performing the editing processing on the video frame in the first video further comprises:
performing scaling processing and/or rotation processing on the second video frame image in the first video.

4. The method of claim 2, wherein performing, based on the display position of the target object in the first video frame image, the cropping processing and the position movement processing on the second video frame image to obtain the third video frame image in the second video comprises:
determining, based on the display position of the target object in the first video frame image, a cropping parameter and a movement parameter corresponding to a respective second video frame image;
performing, based on a plurality of cropping parameters and a plurality of movement parameters corresponding to a plurality of second video frame images, the cropping processing and the position movement processing on the plurality of second video frame images to obtain a plurality of third video frame images in the second video.

5. The method of claim 4, wherein determining, based on the display position of the target object in the first video frame image, the cropping parameter and the movement parameter corresponding to the respective second video frame image comprises:
determining a display position of the target object in the respective second video frame image;
determining, based on the display position of the target object in the first video frame image and display positions of the target object in the plurality of second video frame images, cropping parameters and movement parameters corresponding to the plurality of second video frame images.

6. The method of claim 5, wherein determining the display position of the target object in the respective second video frame image comprises:
for any one of the second video frame images;
determining the target object in the second video frame image, and determining a plurality of key points corresponding to the target object;
determining, based on the plurality of key points, the display position of the target object in the second video frame image.

7. The method of any of claims 4-6, wherein performing, based on the plurality of cropping parameters and the plurality of movement parameters corresponding to the plurality of second video frame images, the cropping processing and the position movement processing on the plurality of second video frame images comprises:
performing, starting from an initial frame of the plurality of second video frame images, the cropping processing and the position movement processing on the plurality of second video frame images sequentially.

8. The method of any of claims 1-5, wherein determining the target object in the first video frame image comprises:
detecting to-be-selected objects in the first video frame image, and determining a position of a respective to-be-selected object in the first video frame image;
generating a selection box corresponding to the respective to-be-selected object in the first video frame image based on the position of the respective to-be-selected object in the first video frame image;
determining, in response to a touch operation on the selection box, a to-be-selected object corresponding to the selection box as the target object.

9. A video processing apparatus, comprising an obtaining module, a determining module and a processing module, wherein:
the obtaining module is configured to obtain a first video frame image in a first video;
the determining module is configured to determine a target object in the first video frame image;
the processing module is configured to perform, based on a display position of the target object in the first video frame image, editing processing on a video frame in the first video to obtain a second video, wherein display positions of the target object in video frame images of the second video are the same as the display position of the target object in the first video frame image.

10. An electronic device, comprising: a processor and a memory;
the memory storing computer executable instructions;
the processor executing the computer-executable instructions stored in the memory, so that the processor performs the video processing method of any one of claims 1 to 8.

11. A computer-readable storage medium storing computer-executable instructions which, when a processor executes the computer-executable instructions, implement the video processing method of any one of claims 1 to 8.
